# EUROPEAN PATENT APPLICATION

(11) **EP 2 624 190 A1**
(43) Date of publication of application: **07.08.2013**
(21) Application number: 12153943.1
(22) Date of filing: 03.02.2012
(51) Int. Cl.: G06Q 20/02, G06Q 20/38

(54) **Authentication of payment transactions using an alias**

(71) Applicant: Dubois, Pieter, 2260 Korbeek-Lo (BE)
(72) Inventor: Dubois, Pieter, 2260 Korbeek-Lo (BE)

(57) **Abstract**

Described herein is a payment transaction system (100) in which a payment transaction is authenticated using an alias. When procuring an item from a supplier (120), a customer (110) needs to provide payment in some form or the other. Profiles relating to both the customer (110) and the supplier (120) are stored in an environment managed by a broker (130) and payment is effected by transfer of within that environment from a customer wallet to a supplier wallet. The customer (120) is represented as an alias as far as the supplier (120) is concerned. In one embodiment, the alias is provided by a data structure configured in accordance with an electronic representation of a medium of exchange. In an alternative embodiment, the alias is provided by an external identity provider (140) such as a social network with which the customer (120) is associated. In each embodiment, the anonymity of the customer (120) is maintained with respect to the supplier (120).

## Description

### Field of the Invention

The present invention relates to authentication of payment transactions using an alias, and is more particularly, although not exclusively, concerned with the authentication of payment transactions using electronic networks and/or systems.

### Background to the Invention

Payments using electronic networks tend to be used a great deal nowadays, especially for smaller values. A typical transaction costs at least 0.5€/$ because of several intermediaries in the end-to-end payment chain. If using a credit card, a consumer or customer needs to enter data relating to his/her credit card account, typically entering between 80 and 100 characters. An alternative to using a credit card includes using secure identification (secure-ID) devices which tend not to be carried around for fear of misplacing them and are typically used in the home of the consumer.

A further alternative to both credit cards and such secure-ID devices is to redirect the consumer or customer to another website where they need to log in with dedicated user identification (user-ID) credentials and passwords which need to be remembered. In addition, a consumer or customer tends to lose his/her privacy during the transaction process. Moreover, wherever a bank or credit card is used, the consumer or customer has an increased risk of fraudulent use of his/her cards if the electronic network has insufficient security.

In each of these types of transactions, the identification of the consumer or customer making the transaction needs to be verified before payment is completed and the item to be purchased delivered.

### Summa of the Invention

It is therefore an object of the present invention to provide a method of validating a transaction without disclosing any information about the consumer or customer wishing to make the transaction.

It is a further object of the present invention to provide a method of validating a transaction in which the minimum amount of information needs to be transmitted to enable payment to be made.

It is another object of the present invention to allow transactions to be seamlessly performed from the point of view of a customer.

In accordance with a first aspect of the present invention, there is provided a payment processing system for processing a payment transaction, the system comprising:-
a first entity tendering payment in said payment transaction for at least one item;
a second entity receiving payment from said first party in said payment transaction in return for supplying said at least one item; and
a third entity having a trust relationship with both said first and second parties and through which said payment transaction is to be facilitated;
**characterised in that** said third entity comprises an environment for transferring and storing electronic representations of at least one medium of exchange for transactional purposes;
and in that said third entity validates said payment transaction in accordance with unique identity information provided to it by both said first entity and said second entity, said first entity being represented as an alias to said second entity for authentication purposes.

In this way, the transaction is validated and authenticated without the second entity being aware of the identification of the first entity.

Preferably, said third entity further comprises at least one first entity profile relating to said first entity and at least one second entity profile relating to said second entity within said environment, said unique identity information of said first and second entities being stored in respective ones of said first entity profile and said second entity profile.

In addition, said third entity comprises at least one wallet associated with each entity profile.

In an embodiment, said payment transaction comprises transferring at least one medium of exchange between a first entity wallet and a second entity wallet. In this embodiment, said each medium of exchange may be represented in electronic format and an electronic representation of said medium of exchange is transferred between said first entity wallet and said second entity wallet.

In one embodiment, said alias of said first entity is provided by a data structure which is configured in accordance with said electronic representation of said medium of exchange. Said data structure may be derived from a first data string which includes a private key. Said data structure may have a fixed length hash value.

Said data structure may form part of a mapping table within said environment, said mapping table linking each data structure to said first entity profile. Said mapping table may link each data structure to one of said first entity wallets within said first entity profile.

In another embodiment, said alias of said first entity is provided by a fourth entity, said first entity being associated with said fourth entity. In this case, said fourth entity interacts with said third entity during authentication to confirm said first entity identity for said second entity. Fourth entity information may form part of a mapping table within said environment, said mapping table linking said fourth entity information to said first entity profile. In this case, said mapping table may link said fourth entity information to one of said first entity wallets within said first entity profile.

In addition, information relating to said fourth entity may be stored in said first entity profile within said environment.

In a preferred embodiment, said fourth entity comprises a social network.

### Brief Description of the Drawings

For a better understanding of the present invention, reference will now be made, by way of example only, to the accompanying drawings in which:-
Figure 1 is a block diagram providing an overview of a transaction system in accordance with the present invention;
Figure 2 is a simple block diagram illustrating the four main elements in a transaction system in accordance with the present invention;
Figure 3 is a block diagram illustrating customer/merchant/broker interaction in accordance with a first embodiment of the present invention;
Figure 4 is a block diagram illustrating customer/merchant/broker interaction in accordance with a second embodiment of the present invention where the alias is provided by a fourth party;
Figure 5 is a schematic illustration of a newspaper website from which a customer wishes to obtain an article;
Figure 6 is similar to Figure 5 but includes a validation window within the newspaper website;
Figure 7 is a schematic illustration of the validation process in accordance with the second embodiment of the present invention;
Figure 8 is similar to Figures 5 and 6 but illustrating the full article after a validated payment has been made;
Figure 9 is a block diagram illustrating an overview of the generation of 'tickets' and 'coins' in accordance with the present invention;
Figure 10 is a block diagram illustrating the generation of 'tickets' and 'coins' in more detail;
Figure 11 is a schematic illustration of a web page showing a customer profile;
Figure 12 is a schematic illustration of the relationship between a customer, merchant or supplier, a broker and an external identity provider;
Figure 13 illustrates a block diagram of a validation process in accordance with the present invention; and
Figure 14 is similar to Figure 13 but illustrates an authentication process forming part of the validation process in more detail.

### Description of the Invention

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

In accordance with the present invention, a transaction occurs when a customer provides an indication that he/she has the intention to pay to a merchant or supplier for a particular item. He/she does not need to disclose his/her identity and only needs to provide the minimum of information required to make the transaction. The supplier transfers this minimum information to a broker who makes the actual payment between the supplier and a customer 'wallet' within his/her system using an alias which is linked to either the identity of the customer or his/her 'wallet'.

This can be implemented in two ways, namely, where the customer uses an anonymous content-free 'coin' or 'token' with the supplier, the 'coin' or 'token' serving as the alias; or where the customer indicates to the supplier that he/she wishes to use an external identity provider as a 4^{th} party and that the broker should interact with that 4^{th} party to obtain the alias.

The broker maintains a profile for each customer and for each merchant or supplier. In addition, within each profile, at least one 'wallet' is provided from which payment is made in the case of customers and to which payment is made in the case of merchants or suppliers.

In accordance with the present invention, a medium of exchange (MoE) is used for the transfer of payments between a customer and a merchant or supplier via the broker. The MoE can be real money, virtual money, vouchers, etc., and includes anything that can represent some sort of value and can be represented as a data structure. The MoE is transferred to the merchant or supplier in a secure way. This will be described in more detail below.

Elements or features described below which are the same in each of the Figures have the same reference numerals wherever they occur.

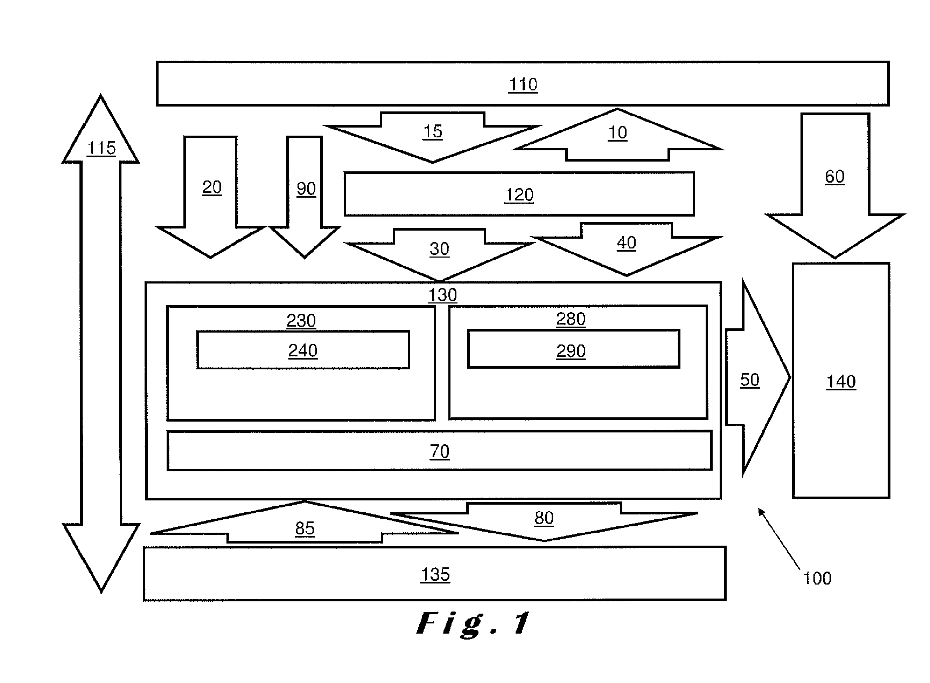

Figure 1 illustrates an overview of a transaction system 100 in accordance with the present invention, and comprises a customer 110, a merchant or supplier 120, a broker 130 and an external identity provider (EIP) 140. The customer 110 can interact directly with the merchant or supplier 120 in order to procure goods or services 10 in exchange for payment 15 in the form of a 'coin' or 'token'. In this case, the 'coin' or 'token' is obtained from the broker 130, as indicated at 20, in exchange for an MoE, the source 135 of which can be a bank account, credit or debit card, cash, a mobile telephone contract, pre-paid vouchers etc. In this case, the merchant or supplier 120 redeems the 'coin' or 'token' with the broker 130, as indicated by arrow 30, and supplies the goods or services.

The source 135 of MoE is linked to the customer 110 via an electronic network 115, for example, the internet, a mobile network, a virtual private network (VPN) etc.

Alternatively, the customer 110 can interact with the merchant or supplier 120 so that payment is made through the broker 130 whilst maintaining the anonymity of the customer 110. In this case, the merchant or supplier 120 sends a request to the broker 130 for validation and/or authorisation for the payment, as indicated by arrow 40 as will be described in more detail below. The broker 130 requests the identity of the customer 110 from the EIP 140, as indicated by arrow 50, the customer 110 having previously provided his/her identification to the EIP 140 as indicated by arrow 60.

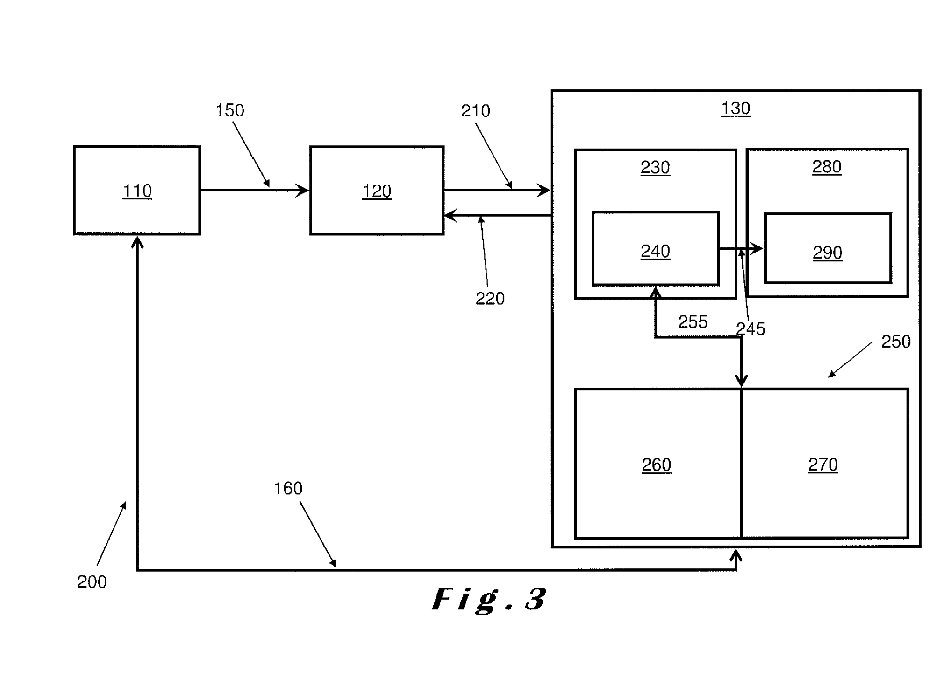

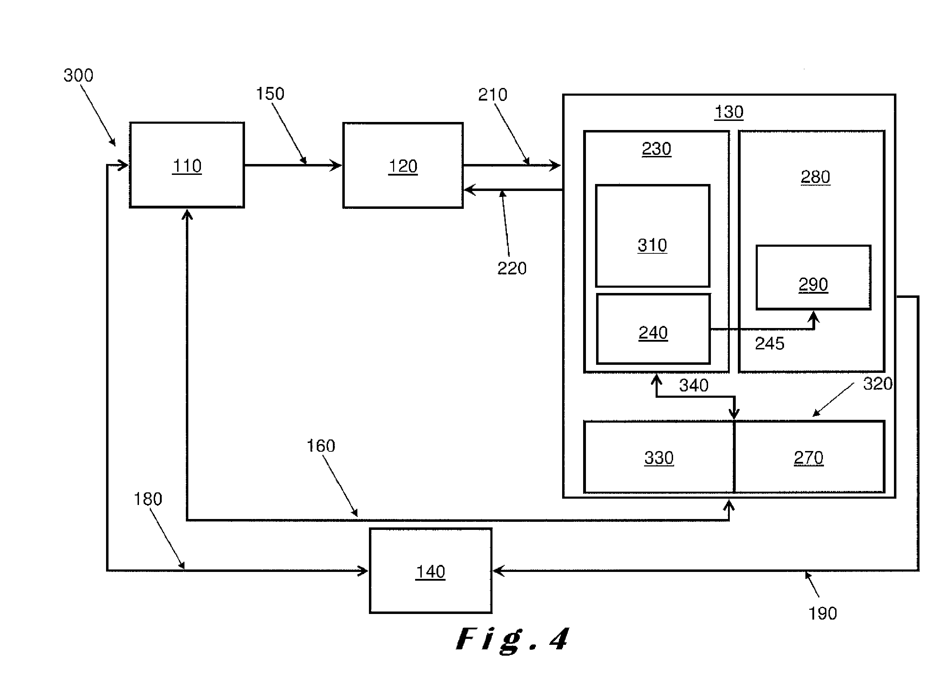

The broker 130 maintains a customer profile 230 and a merchant or supplier profile 280 as will be described below in more detail with reference to Figures 3 and 4. Each profile 230, 280 has an associated wallet 240, 290 into which and from which MoE can be transferred as part of the transaction. In addition, the broker 130 has global referential and transaction facilities 70 which permit the transfer of MoE to and from the source of MoE 135 as shown by arrows 80 and 85 respectively. In addition, transactions are facilitated between 'wallets' inside the broker 130 (not shown).

Additionally, the customer 110 can manage his/her customer profile 240 with the broker 130 as shown by arrow 90.

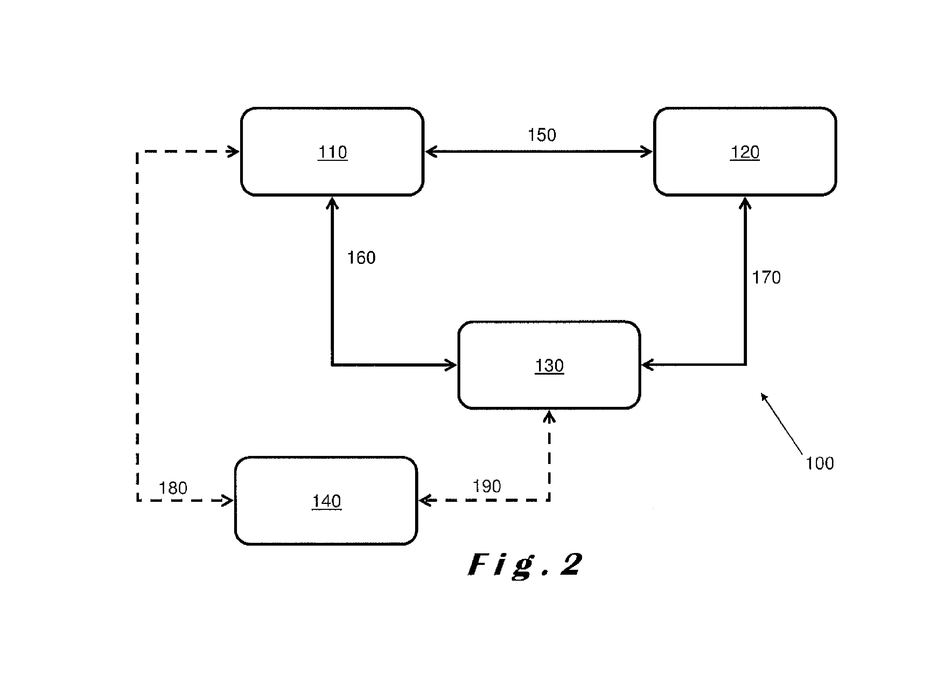

Each part of the transaction system 100 will now be described in more detail with reference to Figures 2 to 14 below.

In Figure 2, a block diagram is shown that illustrates the interactions between four parties when using one embodiment of a transaction system 100 in accordance with the present invention. The system 100 comprises a first party, a customer 110; a second party, a merchant or supplier 120; a third party, a broker 130; and a fourth party, an external identity provider 140.

In accordance with another embodiment of the transaction system, there is no external identity provider 140 as described with reference to Figure 3 below.

Returning to Figure 2, the customer 110 is the party that wishes to procure goods and services from the merchant or supplier 120, and the merchant or supplier 120 is the party that provides the goods and services to the customer 110 on payment for those goods and services. The customer 110 accesses the merchant or supplier 120, as indicated by arrow 150, either over an electronic network or in the real world, and provides a transaction enabler as part of the payment process for the goods and services to be procured from the merchant or supplier 120. The transaction enabler is the means by which the customer 110 indicates the willingness to pay the merchant or supplier 120 who can use it to initiate a transaction within the broker 130. This enables constraints associated with the transaction enabler to be respected, for example, maximum value, validity etc. This will be described in more detail below.

The broker 130 is the party who brings customer 110 together with the merchant or supplier 120 by providing a capability for each customer to store MoE in a 'wallet' with the broker 130, as indicated by arrow 160, and for the merchant or supplier 120 to have MoE transferred into his/her 'wallet', as indicated by arrow 170. As both the customer 110 and the merchant or supplier 120 have accounts with the broker 130, the broker 130 provides a mechanism for transferring MoE from a customer 'wallet' to the merchant or supplier 'wallet' when a customer wishes to pay for goods and services.

The customer 110 accesses the broker 130 to manage his/her profile, to add MoE to his/her 'wallets', and to provide an alias as his/her transaction enabler. The merchant or supplier 120 accesses the broker 130 to manage his/her profile and to perform payment transactions with the alias provided by the customer 110.

As an alternative, the customer 110 may interact directly with the broker 130 to transfer MoE to the merchant or supplier 120 himself/herself via the broker 130.

The external identity provider 140 is the party that has a trust relationship with both the customer 110 and the broker 130 as indicated by arrows 180 and 190 respectively. The external identity provider 140 provides an alias representing the customer 110 to the broker 130, which the broker 130 can use to identify the customer 110 (or customer 'wallet') in his own system to initiate the payment transaction.

In Figure 3, a block diagram illustrating an embodiment of transaction system 200 where no external identity provider is required.

The transaction system 200 comprises the customer 110, the merchant or supplier 120 and the broker 130. As before, the customer 110 is connected for interaction with the merchant 120 as shown by arrow 150 and with the broker 130 as shown by arrow 160. The merchant or supplier 120 has a two-way interaction with the broker 130 as indicated by arrows 210 and 220. In the direction of arrow 210, the merchant or supplier 120 interacts with the broker 130 for payment, and in the direction of arrow 220, the broker 130 confirms the payment has been made.

The broker 130 comprises a customer profile 230 including at least one customer 'wallet' 240 having a unique ID; a mapping table 240 including a mapping between 'coins' or 'tokens' 260 and profile/'wallet' ID 270; and a merchant or merchant profile 280 including at least one merchant or supplier 'wallet' 290 having a unique ID. The customer profile 230, and in particular the customer 'wallet' 240, is linked to the mapping table 250 as indicated by arrow 255.

It will be appreciated that there are a number of customer profiles and a number of merchant or supplier profiles but only one is shown for each category of profile for clarity. Similarly, there may be more than one customer 'wallet' 240 linked with each customer profile 230 and more than one merchant or supplier 'wallet' 290 linked with each merchant or supplier profile 280.

The mapping table 250 includes a mapping of all 'coins' or 'tokens' with their associated profile/'wallet' IDs 270 for all customer profiles 230 and/or customer 'wallet' IDs 240.

In this embodiment, the customer 110 obtains a configurable, personal, but anonymous, representative neutral code, the 'coin' or 'token' as described above, which is attuned to the transaction from the broker 130 through a variety of channels, for example, from a website, a mobile application (app), SMS message, etc.

The customer 110 provides this 'coin' or 'token' to the merchant or supplier 120 as part of his/her interaction as indicated by arrow 150. The 'coin' or 'token' can be provided via a variety of channels, for example: on paper; by pasting it on the website of the merchant or supplier 120 or via a mobile app; by presenting a bar code or a quick response (QR) code that the merchant or supplier 120 scans with an optical reader; through a card with a radio frequency ID (RFID) or near field communication (NFC) tag representing the 'coin' or 'token' which the merchant or supplier 120 reads with an RFID or NFC reader etc.

The merchant or supplier 120 uses this 'coin' to initiate a transaction, as indicated by arrow 210, over electronic networks with the broker 130 providing his/her own identity and 'wallet' details. The broker 130 is able to link the 'coin' or 'token' to the customer profile 230 or a particular customer 'wallet' 240 using the mapping table 250. The customer 'wallet' 240 is then debited for the value of the transaction and the merchant or supplier 'wallet' 280 is credited with the same value as indicated by arrow 245. When the transaction is successful, the broker 130 confirms the transaction to the merchant or supplier 120, as indicated by arrow 220, who then provides access to the item or article procured to the customer 110.

In Figure 4, a block diagram illustrating an embodiment of a transaction system 300 where an external identity provider is required in a similar way to the block diagram of Figure 3. The transaction system 300 comprises the customer 110, the merchant or supplier 120, the broker 130, and the external identity provider 140. As before, the customer 110 is connected for interaction with the merchant or supplier 120 as shown by arrow 150, with the broker 130 as shown by arrow 160, and with the external identity provider 140 as shown by arrow 180.

The external identity provider 140 comprises an external party, for example, a social network, such as, *Twitter, Facebook, Google*+, *Yahoo!, Linkedln, Windows Live* etc., which provides an alias to the broker 130 without providing the identity of the customer 110 to the merchant or supplier 120. [*Twitter* is a trademark of Twitter Inc.; *Facebook* is a trademark of Facebook Inc.; *Google*+ is a trademark of Google Inc.; *Yahoo!* Is a trademark of Yahoo! Inc., a multinational internet corporation; *Linkedln* is a business-related social networking site; and *Windows Live* is a collective brand name for a set of services and software products from Microsoft Inc. that form part of their software plus services platform]

The customer profile 230 includes, in addition to at least one customer 'wallet' 240 having a unique ID, an external identity provider alias 310 which is mapped to the profile/'wallet' ID 270 in a mapping table 320. The customer profile 230, and in particular the customer 'wallet' 240, is linked to the mapping table 320 as indicated by arrow 340.

In the transaction system 300, the customer 110 signals to the merchant or supplier 120 electronically, for example, over a web-based application or a mobile app, that he/she intends to pay for an item or an article, as indicated by arrow 150, and the merchant or supplier 120 transfers this intention, together with his own identity and transaction details to the broker 130, as indicated by arrow 210. The broker 130 then obtains authorisation for payment by instructing the customer 110, as indicated by two-way arrow 160.

Once authorisation for payment has been received from the customer 110, the broker 130 then retrieves an alias from external identity provider 140, as indicated by arrow 190. This alias was previously registered in the external identity provider alias 310 as part of the customer profile 230, and is linked to the customer 'wallet' 240 at the broker 130.

When the broker 130 receives the alias, he/she matches it to the customer profile or 'wallet' ID 270 using mapping table 320, and initiates a payment from the customer 'wallet' 240 to the merchant or supplier 'wallet' 290 as indicated by arrow 245. When the transaction has been completed, the broker 130 provides confirmation, as indicated by arrow 220, to the merchant or supplier 120 who then provides access to the item or article to the customer 110.

From the point of view of the customer 110, the validation process appears to be seamless - as if he/she has not left the web page or mobile app associated with the merchant or supplier 120.

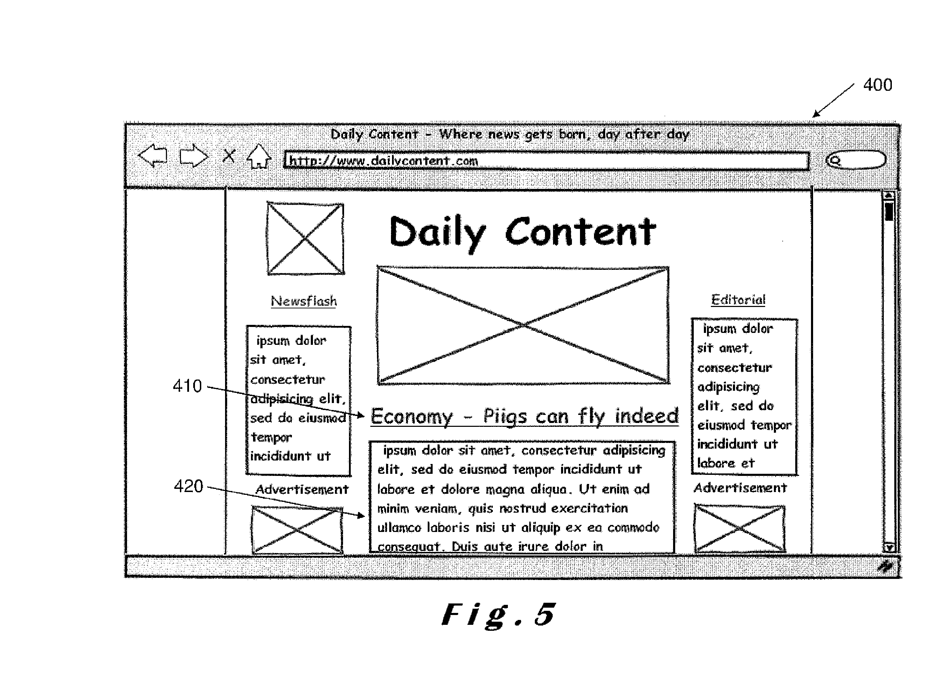

Figure 5 illustrates an example of web page 400 including an 'article' 410 that can be bought from the merchant or supplier of the website. The 'article' 410 is presented together with as a teaser paragraph 420 shown to entice a visitor to the website 400 to make a decision as to whether he/she wants to purchase the full 'article' 410.

Although a newspaper story is shown as the 'article' to be purchased, it will be appreciated that the present invention is not limited to newspaper stories and can include the purchase of a song, a video, an in-game virtual good, access to online software functionality or any other type of good, both online and offline. In the latter case of an offline good, a representation of payment information needs to be transferrable to an online format, for example, by scanning a bar code, to make the payment transaction online. In addition, the present invention is not limited to the purchase of goods but can also apply to services.

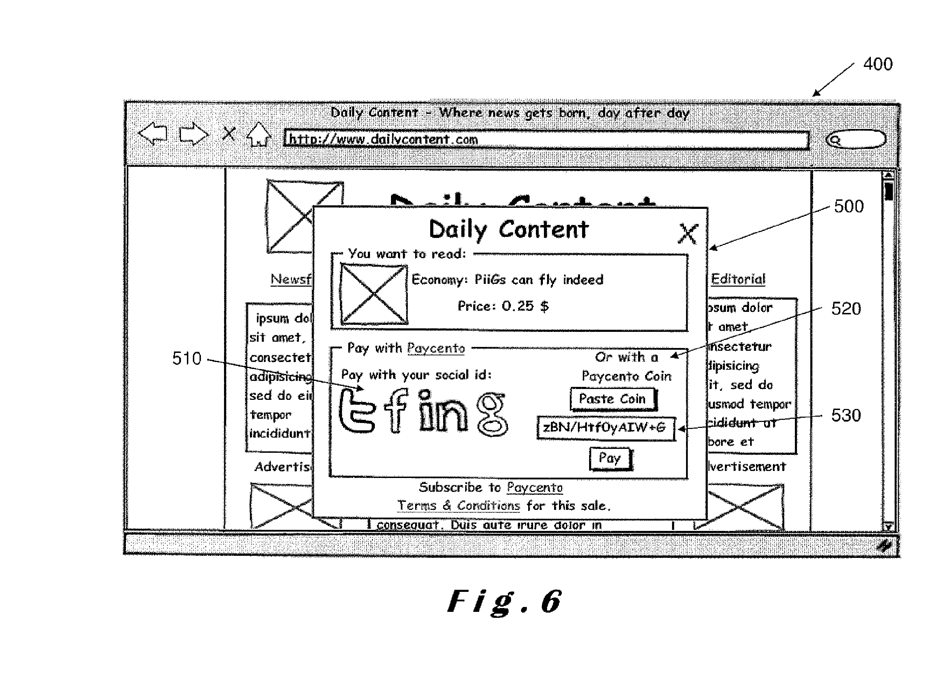

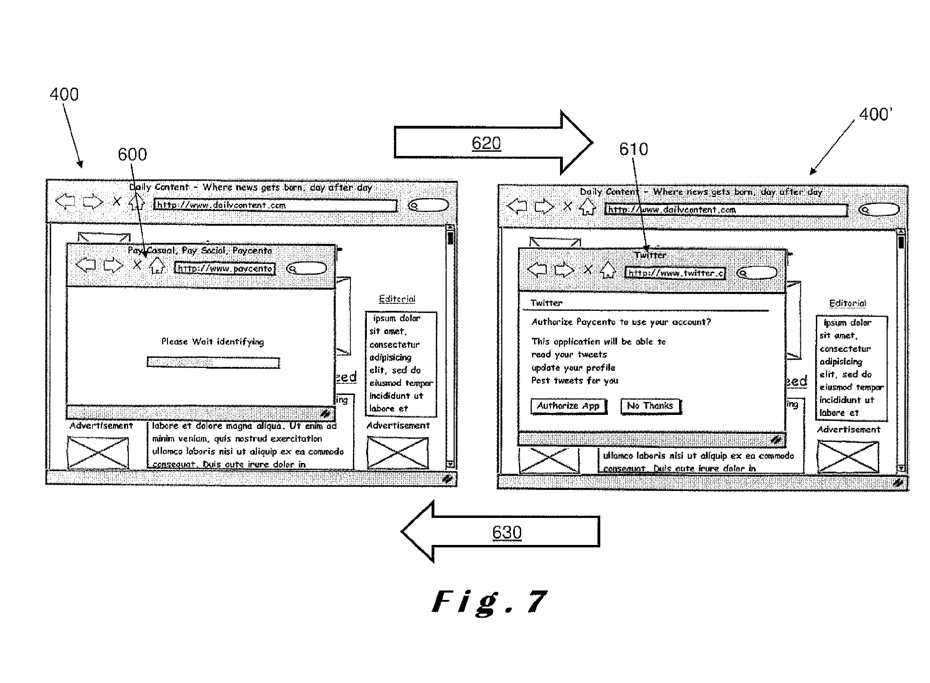

In Figure 6, an example of a payment screen 500 within the website 400 is shown. The payment screen 500 illustrates how the payment options can be presented to the customer by the merchant or supplier, when trying to access the full article, and where both the choice of paying with a social ID 510 (as described above with reference to Figure 4) or paying with a 'coin' or 'token' 520 (as described above with reference to Figure 3). An example of a 'coin' payment box 530 is shown where a 'coin' or 'token' has been pasted into the box on the payments screen 500. Payment by 'coin' or 'token' is initiated by the customer clicking on the 'Pay' box 540. It will be appreciated that the payment may also be initiated automatically. Payment by social ID is described with reference to Figure 7 below.

Figure 7 illustrates two stages in the payment by social ID, by clicking the social ID icon 510 as shown in Figure 6, as it appears to a customer using the website 400. Selection of payment by social ID opens a broker pop-up window 600 which sits on top of the web page 400 of the merchant or supplier which shows a progress bar of the transaction at the broker (as shown on the left-hand side of Figure 7). As described above, the broker coordinates the authentication between customer and the external identity provider, in this case, a social network.

This broker pop-up window 600 is then replaced with a pop-up window 610 of the social network 610, as indicated by arrow 620 and shown on the right-hand side of Figure 7. This provides an opportunity by the social network to obtain credentials from the customer in one of three ways, namely: by prompting explicitly for credentials like user ID and password for the social network; or by getting these credential implicitly, for example, by means of a 'cookie' placed by the social network in an earlier session on the device of the customer; or by direct integration of *Twitter,* for example, into the address book of the device used as in some smartphone operating system implementations. This latter case appears to the customer as a seamless logon.

In the example shown in Figure 7, the social network asks for authorisation by the customer to use his/her account for the authentication and validation of the transaction. This is optional and dependent on the policy installed by the social network.

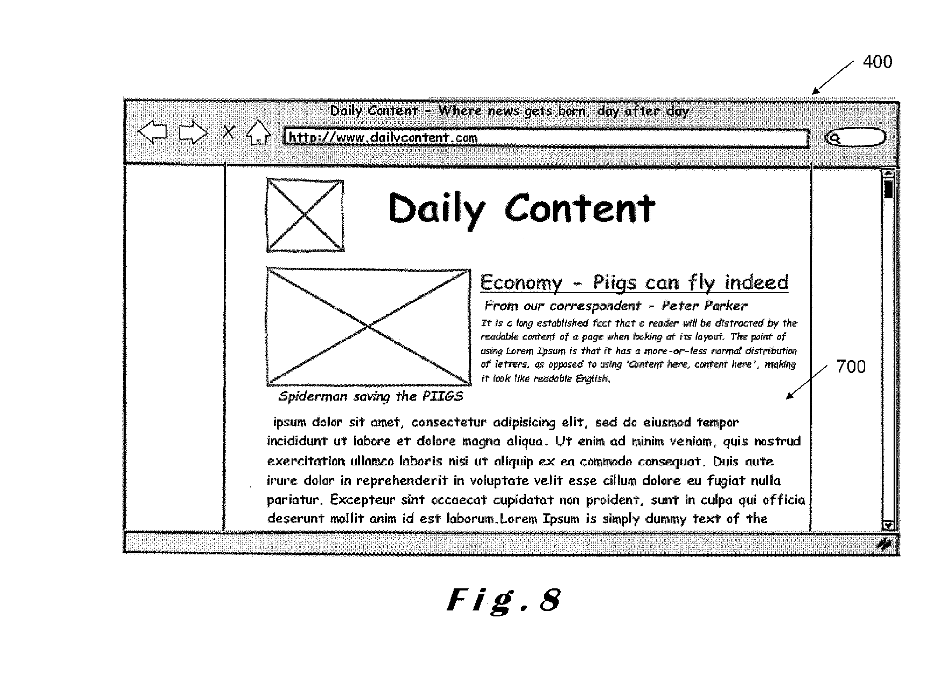

After authentication and authorisation by the social network has been communicated to the broker, the pop-up window 610 of the social network is replaced again by the broker pop-up window 600 as indicated by arrow 630 and shown on the left-hand side of Figure 7. During this time, the broker has obtained an alias or identity key for the customer from the social network and uses this identity key to complete the payment transaction in the background. When successful, the broker informs the merchant or supplier and hands control back to the browser window to the merchant or supplier web page which then provides a full version 700 of the article, as shown in Figure 8, when he/she receives a message indicating that the payment was successful.

In another example, the interaction between customer, broker and external service provider may be shown inside the equivalent of an iFrame inside the merchant or supplier web application. However, it will be appreciated that it may also be the case that the interaction is completely transparent and invisible to the customer.

As described above, in the broker, users, for example, customers, merchants and broker representatives, are each identified by a unique broker internal user identifier and is used internally only by the broker. These unique broker internal user identifiers may be implemented by unique user IDs (UUIDs). Such a UUID is linked to one or more unique public user identifiers managed by the broker, for example, but not limited to, a username, a telephone number, a unique alphanumeric code, a fingerprint representation, an email address, which is stored by the broker.

Linked to the broker-managed identifiers are also external alias identifiers which are managed by an external party with which the user identifies himself/herself when engaging with the broker for payment transactions as well as for interacting directly with the broker. Examples of external identity providers include *Facebook, Twitter, Google*+, *Linkedln, Yahoo!, Windows Live* etc. When a user indicates to the broker that he wants to use a supported external identity provider, an alias of this external identity is linked to the identity of the user managed by the broker and is stored in his/her profile as described above with reference to Figure 4.

As described above with reference to Figures 3 and 4, a profile contains all information about customers and merchants or suppliers that utilise the services of the broker. For a customer, the profile is uniquely identified by a numeric identifier, the profile ID. For a merchant or supplier, the profile is also uniquely identified by a number identifier, the merchant or supplier ID. Each profile provides reporting capabilities for all changes and transactions done within that profile.

As described above, each profile is linked to a 'wallet' which contains a MoE which can be divided over one or more currencies. The MoE cannot exist in more than one 'wallet' at the same moment, and is therefore either in the customer 'wallet' or in the merchant or supplier 'wallet'.

One or more customer 'wallets' can be created when a profile is initially created by a customer, and therefore each customer profile can be linked to more than one 'wallet'. Each 'wallet' is uniquely identified by a numeric identifier, the customer 'wallet' ID when referred to by the broker internally. Only one customer can be owner of a particular customer 'wallet', but more than one profile, and hence different customers, can be linked to a 'wallet'. The MoE in a customer 'wallet' acts as a pool from which payment can be made. 'Wallets' can be grouped into logical customer 'wallet' groups for management purposes.

It is possible to attach information to customer profiles indicating that they are linked to 'wallets' or 'wallet' groups and which allows the transfer of MoE from outside the broker to "wallets' created inside without having to re-enter all required data, for example, credit card data, or bank information. It is also possible to attach 'transfer rules' to 'wallets' and/or 'wallet' groups which determine under which conditions MoE is transferred from/to the 'wallet' to/from outside the broker system. These 'transfer rules' may consist of, but are not limited to, value of MoE passing a threshold, periodic transfers of MoE, and periodic limits.

A customer 'wallet' can be loaded using different mechanisms, for example:
- By MoE transfers from a customer bank 'wallet' to the broker bank 'wallet' using the 'wallet' ID as an identifier;
- By charging of a customer credit or debit card while the customer is logged on to his/her profile on the broker website - the 'wallet' ID may be given as an identifier for the credit or debit card processor so that the confirmation message from the latter allows the broker to know which 'wallet' has been topped-up;
- By sending an SMS with the 'wallet' ID and a MoE value to the SMS number of the broker - the mobile phone operator will add the MoE value to the customer phone bill and transfer the funds to the broker 'wallet' with the 'wallet' ID as identifier;
- By registering the customer mobile phone number in his/her broker profile and by sending an SMS with his/her phone number and the MoE value to the premium SMS number of the broker who interacts with the mobile phone operator to bill the customer accordingly;
- Through other payment mechanisms like pre-paid cards whose 'tag' is entered in the customer profile - the broker will use the 'tag' numbers to collect the money from the pre-paid card vendors;
- By linking the 'wallet' with a financial service provider, or a telecom operator allowing the 'wallet' to become 'overdrawn' and which is replenished at a later date - in this way, a credit facility is provided;
- By scanning the QR codes or copying voucher codes from a merchant or supplier, who distributes virtual money as MoE this way - this transfers the virtual money from the merchant or supplier to the customer, who can then use this virtual money with the merchant or supplier (or one of the affiliates of the merchant or supplier) to access or obtain discounts to articles provided by the merchant or supplier;
- Through cash exchange with a broker representative; and
- Through integration with other electronic payment providers that exchange MoEs.

It will be appreciated that other transfer mechanisms are also possible.

Customer 'wallets' can transfer MoEs outside the broker system to a financial intermediary, for example, a bank 'wallet'.

In addition, 'wallets' or 'wallet' groups may contain rules that dictate when and how much MoE can be drawn from each 'wallet'. It provides the customer with the ability to set limits on the usage of the 'wallet', for example, to set maximum amounts that can be drawn from the 'wallet' per day/week/month, per transaction, identify the counterparty that can be paid through the 'wallet', etc. Other data structures associated with 'wallets' are the 'ticket' store and 'coin' store, which manage the way MoE can be drawn from the 'wallet' as will be described in more detail below.

Two keys are generated when creating the 'wallet' and which are used as an identifier of the 'wallet' in transactions: the public key and the private key. It is possible to transfer MoE from one 'wallet' to another 'wallet', where both 'wallets' are owned by the same customer. Alternatively, the MoE can be transferred by another customer or merchant or supplier having a profile with the broker. The public key of the 'wallet' serves to identify the 'wallet' to which money is to be transferred and is available to all interested parties. The private key is used to identify the 'wallet' from which money is transferred, and is only known to the broker.

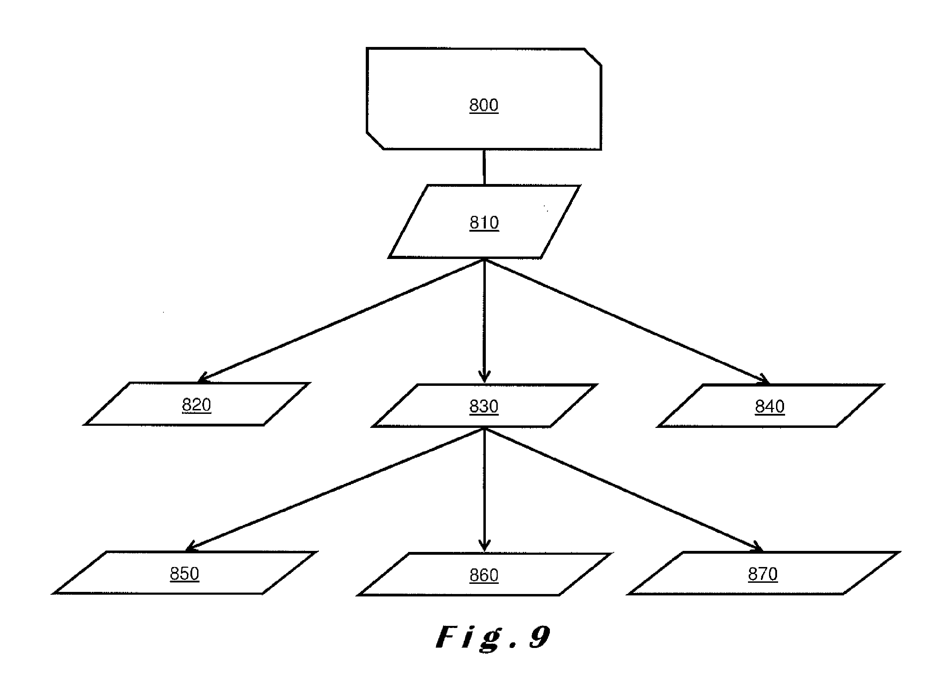

Figure 9 illustrates schematically the generation of 'tickets' and 'coins'. As described above, each 'wallet' 800 has a public key which can be used by others in the broker system as a way to transfer MoE value to the 'wallet' associated with the public key, and a private key 810 which is used by the customer to pay from the 'wallet' by creating 'tickets' 820, 830, 840 from the private key 810. One or more 'tickets' 820, 830, 840 can be generated from the private key together with a specific configuration which needs to be valid within the constraint set by the 'wallet' at the moment of payment. From each 'ticket', one or more 'coins' 850, 860, 870 can be generated, in this case, from 'ticket' 830, which allow actual payments to be made according to the payment configuration in the 'ticket' from which each 'coin' is generated. 'Coins' can be generated in bulk from a single 'ticket'.

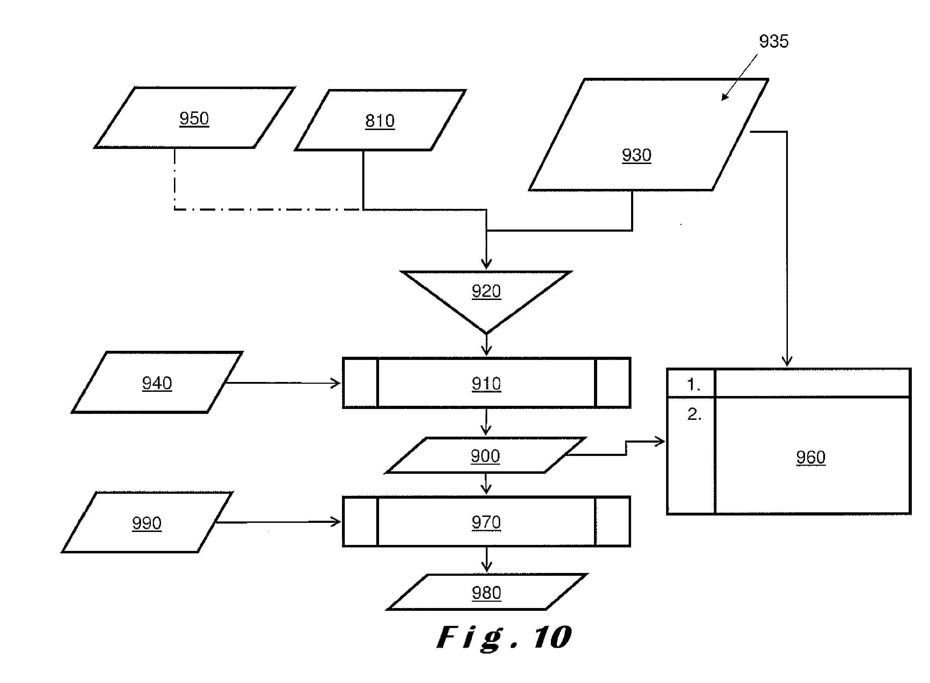

'Tickets' and 'coins' are generated, as shown in Figure 10. A 'ticket' 900 (corresponding to any one of 'tickets' 820, 830, 840 shown in Figure 9) is generated by encrypting or encoding 910 a data structure 920 that uses or includes the private key 810 (Figure 9) and additional information 930 that have been merged and serialised into a data string. A 'ticket' is randomised with a salt 940 (a well-known method used in cryptography) as there can be multiple 'tickets' generated for the same private key 810. Salt is given by way of example as a randomisation technique and any other suitable randomisation technique can also be used.

In addition to the encryption or encoding carried out by the broker, it is possible, as an option, for the customer to protect the 'ticket' with his own password 950 which is added to the private key 810 and the additional information 930 before the merger 920. Here, in order to use the information in the 'ticket', the broker will require the customer to enter his/her password. 'Tickets' are stored in a 'ticket' store 960 which is associated with a customer 'wallet' so that the customer can decide on the use of each 'ticket'.

As 'tickets' have variable lengths, depending on the additional information, it is impractical to submit the 'ticket' itself to a merchant or supplier for payment. In addition, there is always a risk that 'tickets' are decrypted and the content exposed by third parties. A solution for these two issues is to create a fixed length hash value 970 from the 'ticket' 900 called a 'coin'. Therefore, a standardised 'coin' 980 can be provided which is randomised using a second salt 990 as there can be more than one 'coin' for each 'ticket', the 'coin' being used by the customer as exchange for goods and services with merchants or suppliers.

The format under which the 'coin' is ultimately presented to the customer or to the merchant or supplier can take different forms depending on the formatting needs required for making the transaction. Some illustrative examples are:
- Human readable format, like an alphanumeric string for entering manually;
- Machine readable format like a bar code or QR code for scanning;
- A stream of bytes like a file;
- An RFID tag;
- A NFC data field; and
- A string stored in a secure element on a mobile phone.

When 'tickets' are generated, one of the additional information records they carry by default is a validity timestamp 935, after which 'coins' generated from it are no longer accepted as payment.

In one embodiment, the type of additional information that can be included in a 'ticket' 900 is a MoE value. A 'coin' generated from the 'ticket' can or cannot decide to reserve the MoE value from the 'wallet'. If the 'coin' reserves the MoE value, then this value is subtracted from the amount available in the 'wallet' and that amount is no longer available for use by other "coins'.

A customer 'wallet' contains a 'coin' store (not shown) in which all 'coins' that have been created are stored. Each 'coin' has a link to its associated 'ticket' in the 'ticket' store, the reserved MoE from the 'wallet', and other information needed for managing the lifecycle of the 'coin'.

Other examples of configuration information that can be stored with the 'ticket' is a start date from which the 'coin' can be used; the reusability of the 'coin', for example, single use or multiple uses; and a coupon code which allows a discount on an article etc.

In the case the MoE has been locked in the configuration of the 'ticket', it will be consumed when the associated 'coin' has been submitted to the merchant or supplier in return for access for a good or service offered by the merchant or supplier. The maximum amount that can be paid with the 'coin' is the MoE value that is set within the 'ticket'. The positive difference between MoE value and the price paid is made available again in the 'wallet' and the index position in the 'coin' store is freed.

In another embodiment, the type of additional information that can be included in the 'ticket' 900 is a 'maximum value of MoE' that can be used with the 'coin'. In that case, the MoE has not been locked in the configuration of the 'ticket', and the 'wallet' will be debited for the price of the article or service up to the value of MoE configured in the 'ticket', and if the amount of MoE available through debit or credit in the 'wallet' is not smaller than the price of the article or service.

An alternative way to retrieve the MoE locked in the 'coin' is by devaluing the 'coin' with the broker. It will be appreciated that this is only valid for the amount or MoE that remains available and has not yet been used.

It is possible to submit a 'coin' to the broker and to query the locked value within the associated 'ticket'.

In another embodiment, the merchant or supplier identity is included as additional information in the 'ticket', which will allow "coin's' generated from this 'ticket' to be used only with a particular merchant or supplier. Identity information may comprise a merchant or supplier ID, a public key or a substitute, for example, a label.

When no MoE value is attached to the 'ticket', then the 'ticket' is generic and can be used to pay for a good or service with a merchant or supplier, by means of the 'coin', for principally any MoE value. In this latter case, it is the 'wallet' rules that determine the maximum value that can be paid with the 'ticket'.

In one embodiment, each 'coin' becomes invalid after a single use, and cannot be used again. This means that after every payment with a 'coin', a new 'coin' needs to be generated. This ensures that a merchant or supplier cannot continue to use the 'ticket', by means of the 'coin', after it has been used to pay for a good or service. This limits the loss in the case of fraud to the MoE value locked within the 'ticket', or to the value determined by the 'wallet' rules.

In another embodiment, a 'coin' can be reused when the associated 'ticket' has explicitly been configured to permit this. This allows a customer, or merchant or supplier, to reuse the 'coin' for subsequent payment transactions. 'Wallet' rules or a maximum MoE value in the 'ticket' can be used to put limits on the amount of MoE the merchant or supplier can charge the customer. This amount can be an absolute value or a periodic value as described below in more detail. A customer may choose to do this when there is a trust relationship with the merchant or supplier, or when it is deemed impractical to resubmit a 'coin' for every transaction.

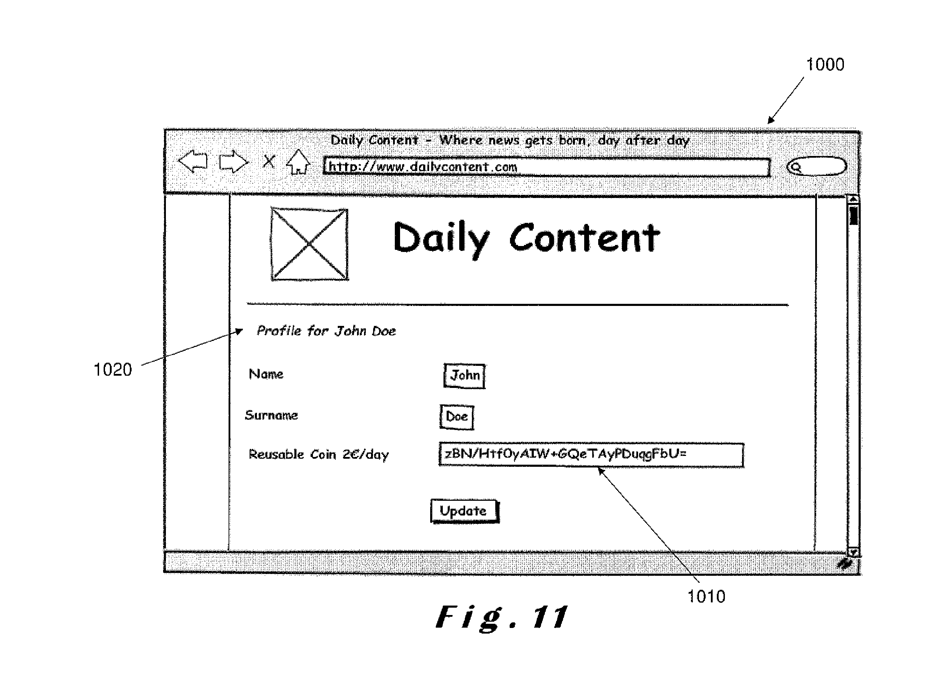

Figure 11 illustrates a web page 1000 where the customer has a profile with the merchant or supplier. Here, a reusable 'coin' 1010 is added as an attribute to a customer profile 1020, and when the customer has logged onto the site of merchant or supplier and wants to access chargeable goods and services, then the merchant or supplier can use the customer 'coin' 1010 stored in the customer profile 1020 with the merchant or supplier to implicitly pay for this access, without any customer intervention. This provides the possibility for an implicit "pay-as-you-go" consumption of articles or services. The maximum amount and the type of reusability (per hour, per day, each time, etc.) configured in the 'ticket' provide the limits for what can be charged to the customer by the merchant or supplier.

Reusability of 'coins' can be implemented in one of two ways:
(i) the 'coin' can be used once in a transaction during the configured reusability period, limited to the amount of MoE as defined by the configuration 'ticket'; or
(ii) the 'coin' can be used multiple times in transactions during the configured reusability period, with the total amount expended by all transactions during the reusability period limited to the amount of MoE as defined by the configuration of the 'ticket'.

The 'coin' configuration includes timing parameters, for example, 'last usage time' and 'period'. In one embodiment, a relative time window is used for determining the next time the 'coin' can be used based on the last time it was used. In this case, the 'coin' cannot be used during a time which falls between the 'last usage time' and a predetermined period of time later, but will be usable again later, that is:
*If 'CurrentTime'- 'LastUsage Time'<= Period then 'Error'*

In another embodiment, an absolute time window is used by using the 'activation time' of the 'coin' and 'last period number' to determine when it can be used the next time. In this case, the 'activation time' is subtracted from the current time, and the result is divided by the 'period' in time length. This is called 'current period number' and is stored as a real number, rather than an integer allowing fractional decimal numbers. If the difference between 'current period number' and 'last period number' is equal or larger than 1, then the 'coin' can be reused. The integer part of the 'current period number' becomes then the 'last period number':
*CurrentPeriodNumber = (CurrentTime - ActivationTime)*/*Period*
*If (CurrentPeriodNumber- LastPeriodNumber >= 1) then OK*
*LastPeriodNumber = Integer(CurrentPeriodNumber)*

In addition to the parameters as described above, the 'coin' contains parameters like 'current value' and 'last reset time', where the latter indicates the last time that 'current value' was reset to the amount of MoE defined by the configuration of the 'ticket'. Every time a transaction happens between 'last reset time' and the 'last reset time' plus 'period', the price of the transaction will be subtracted from the 'current value' as long the result is larger than 0. If the result falls below 0, an error message is provided. In one embodiment, where a relative time window is used, if the current time is larger than 'last reset time' plus 'period' then the 'last reset time' is changed to current time and the 'current value' is reset to the amount of MoE defined by the configuration of the 'ticket':
*CurrentValue = CurrentValue - Price*
*If (CurrentValue >= 0) then OK*
*If (CurrentTime* > *LastResetTime + Period)*
*then LastResetTime = Current Time and CurrentValue = MoEAmount*

Another embodiment for using a reusable 'coin' is as a tag in an RFID card or NFC enabled device, which can then be used to connect with an RFID or NFC reader of a merchant or supplier, to initiate a payment with the broker.

The links between 'tickets' and 'coins' described above exist within the boundaries of the customer profile. However, for general use by the broker, for example, enabling payments between merchant or supplier and customer, the 'tickets' and 'coins' are linked to one another in a global table, which, in one embodiment, is implemented through a mechanism like a 'hash table', a 'rainbow table', or using similar mechanisms. They are inserted in this global table, after having been stored in the 'ticket' store and in the 'coin' store respectively. When a payment is initiated by submitting the 'coin', these tables are used to find the associated 'ticket', which is then decrypted or decoded so that the 'wallet' can be located and the actual transaction performed.

When a customer wants to access a good or service he/she will be presented with a request to provide a 'coin'. By design, the merchant or supplier does not need the identity of the customer in order to conduct the transaction. The privacy of the customer is herewith guaranteed. The merchant or supplier may still require the customer to divulge his identity in order to allow the transaction to take place but that is not an inherent requirement from the point of view of paying with 'coins'

Providing the 'coin' can be done in several ways, but assumes a secured channel between the parties. Some illustrative examples follow:
- The customer could copy the 'coin' from a web browser window where he/she is logged in using his/her profile with the broker, and paste it in the field available in the web browser window presenting the web site of the merchant or supplier.
- A web browser plug-in could make the connection with the broker on behalf of the customer and fetch the 'coin' from the customer profile there (potentially storing one or more locally in his/her cache), without the customer having explicitly logged in into the broker website. When the customer wants to buy something from a merchant or supplier web site, then the customer would do this by clicking the 'Buy' button in the plug-in, and the plug-in would populate the required field in the merchant or supplier web page, for example, as a position where a cursor is positioned).
- The customer could have a print out with the 'coins', either through a print from the broker web site, the pre-paid receipt obtained in a store, or an SMS message. In this case, the customer has no choice but to type in the 'coin' into the required field at the point of sale. 'Coins' may also be presented in the form of a bar code, or equivalent machine readable format, so that it can be scanned at a physical point of sale of the merchant or supplier.
- The customer may send an SMS with his/her mobile phone with a 'coin' (and optionally a MoE value or any other information that the merchant or supplier requires) to an SMS number of the merchant or supplier. The merchant or supplier could reply with a code, or whatever mechanism has put in place to allow the customer to access the goods and services under transaction.
- The customer may use a mobile phone application (an 'e-purse') that abstracts the SMS interface away, to conduct the transaction.
- The customer provides the 'coin' printed out on a piece of paper to a customer service representative of the merchant or supplier who uses it to obtain clearance of the transaction.
- The customer loads the 'coins' on a smartcard through an electronic card reader connected to the customer PC. This allows the customer to pay the merchant or supplier through the smartcard and the electronic card reader while being disconnected from the broker as long as there are 'coins' on the smartcard.
- The customer registers the 'coin' to an RFID antenna or NFC chip or secure element of a mobile phone and provides it to an associated reader of the merchant or supplier for the purpose of doing a transaction.
- As described above, in the case of a trust relationship between a customer and a merchant or supplier, a reusable 'coin' can be registered with the merchant or supplier in advance, for example, by adding the 'coin' as an attribute to his/her profile with the merchant or supplier. Here, assuming the customer has identified himself/herself, for example, 'logged in', with the merchant or supplier, the merchant or supplier can present the customer with a request to present a 'coin' and will start the transaction as described below behind the scenes. Alternatively, the merchant or supplier may already have a 'coin' associated with the customer and the transaction is automatically started without the need for the customer to present a 'coin'.
- Any other means to present a 'coin' to the merchant or supplier.

In the case where the 'ticket' is protected by a customer password, then also the password needs to be submitted with the 'coin', or the transaction will fail.

The merchant or supplier sends a message containing the customer 'coin', and when required, the customer password for the 'coin', back to the broker over a secure channel, together with the price in value of MoE, his/her own merchant or supplier public key, or another identifier, and additional transaction information, for example, transaction ID, internal and external description of the goods and service bought, that is, the receipt. This step can be performed using several standard mechanisms of which illustrative example are the use of a web service or an HTTP POST or a REST calls over HTTP(s) over a TCP/IP connection, typically over the internet.

The broker accepts the message after verification and takes the 'coin' from the message and looks the associated 'ticket' and additional information up through the global. The broker decodes or decrypts the 'ticket' and retrieves the customer private key and other information from the 'ticket'. In the case where the 'ticket' is protected with a customer password, this needs to be part of the information sent by the merchant or supplier or the decryption will fail. At this moment, the broker has all required information to perform the transaction, that is:
- The merchant or supplier public key (or other identifier of the merchant or supplier), which provides the merchant or supplier ID when required by the customer 'ticket'
- The price in MoE value
- The customer private key
- The additional information in the customer 'coin' providing limitations on the transaction.

The broker does some preliminary checks to determine if the 'ticket' is still valid and whether the transactions cost is below the limit set in the 'coin'. Afterwards, he/she looks up the 'wallet' associated with the customer 'coin' using the associated 'ticket', and debits the goods or service MoE value from the 'wallet' if the rules on the 'wallet' or MoE value left in the 'wallet' permit. In the case where the customer 'coin' indicates that the MoE value is locked in the 'wallet', it is unlocked from the 'coin' store. The associated index is freed and the remainder is released back the 'wallet'. In the case where the 'coin' is single use, the broker removes the 'coin' entry from the global table to avoid double usage and sets it to 'expired'. Information relating to the 'coin' is kept for reporting purposes. Finally, the broker looks up the 'wallet' of the merchant or supplier through his/her public key, and credits it with the MoE value equal to the price minus the broker fee. In addition, he/she logs the receipt on the transaction and information, for example, the transaction ID, the MoE value, the fee amount etc., on both the debited and credited 'wallets'. When the transaction has been completed, a reply is sent to the merchant or supplier with the transaction ID and a status notice indicating whether the transaction succeeded or failed. In the latter case, a reason for the failure is provided.

Once the merchant or supplier receives the transaction clearance from the broker, he/she will provide access to the goods or services purchased or procured by the customer, and the customer can take possession of the goods and services accordingly.

A merchant or supplier may wish to distribute 'coins' to his/her customers. Here, the merchant or supplier generates one or more 'coins' of a certain value in MoE from one of his/her 'wallets'. In one embodiment, the MoE is a virtual currency that the merchant or supplier provides himself/herself through the broker. The merchant or supplier distributes the generated 'coins' to his/her customers.

In one embodiment, the 'coins' are reusable and distributed as QR codes on posters, or in printed magazines or newspapers. The customer scans the QR code with a scanner, for example, using a smart phone equipped with a camera and using a software application that can interpret the pictures as QR codes and transform the QR codes into a format that can be sent, together with the customer ID over electronic networks to the broker. At the broker, the 'coin' is used to find the associated 'ticket' in the global table. In addition, the customer identity is added to the global table if not yet present to ensure that the customer cannot redeem the same 'coin' twice. The MoE value as registered in the 'ticket' will be debited from the associated merchant or supplier 'wallet' and the customer 'wallet' will be credited with the MoE value. The customer has then MoE value available for transactions with the merchant or supplier or his affiliates that accept the MoE provided by the merchant or supplier.

In another embodiment, the merchant or supplier has a list of customers to whom he/she sends single use 'coins' by email as an alphanumeric string. The customer can, after authenticating with the broker web site, submit the 'coin' through, for example, a copy/paste operation from the email in a form at the broker website and submit it. This will trigger a payment transaction where the MoE value as registered in the 'ticket' will be debited from the associated merchant or supplier 'wallet' and the customer 'wallet' will be credited. In other embodiments, this process can be automated by embedding the 'coin' in a uniform resource locator (URL) in the email which triggers the transaction automatically when clicked. Authentication from the customer to the broker is still required to allow the broker to identify the customer 'wallet'.

In a further embodiment, vouchers containing 'coins' may be sent to customers by the merchant or supplier when promoting particular products or services. Here, the voucher can be used to provide a price deduction when the customer presents the voucher. The 'coin' in each voucher may be associated with a 'ticket' belonging to a merchant or supplier 'wallet'. These 'coins' can be generated in bulk beforehand and used by the merchant or supplier for printing on the vouchers.

When the customer pays the reduced price for the good or service, assuming that, in this embodiment, he/she pays using traditional means, for example, with money, or debit or credit card, but not with a customer 'coin', what is sent to the broker includes the merchant or supplier originated 'coin' on the voucher. A transfer of MoE occurs between one 'wallet' of the merchant or supplier, for example, a promotional budget 'wallet', to another 'wallet' of the merchant or supplier, for example, the store 'wallet'. In this embodiment, a certain value of MoE is indicated on the voucher, and in the 'ticket' associated with the 'coin', a certain amount of virtual currency with a fixed exchange rate with the MoE given on the voucher is used so that the merchant or supplier does not need to reserve real MoE for this.

As described above, as an alternative to using 'coins', an alias can be used in the payment transaction delivered by an external or 4^{th} party apart from the group comprising the customer, the broker and merchant or supplier. This alternative maintains intrinsically customer anonymity with respect to the merchant or supplier as it is the external party that delivers the alias to the broker which is used to make the payment. By using an alias to enable the transaction, the merchant or supplier only initiates the payment transaction on behalf of the customer with the alias provided by the external party with the permission of the customer.

As described above with reference to Figure 2 above, the EIP 140 has a trust relationship with both the broker 130 and the customer 110. Typically, the customer 110 creates his/her trust relationship with the EIP 140 by registering with a user ID and password at the EIP website. Typically, the broker 130 creates his/her trust relationship with the EIP 140 by registering with a user ID and password at the EIP 140 and receives a shared secret key to be used in future network-based interactions. The EIP 140 and the broker 130 may use two factor authentication or other cryptographic means.

The customer 110 has also a trust relationship with the broker 130 by registering a private user ID (PUI) with the broker 130 and providing the EIP alias of his identity at the EIP 140. After logging onto the website or application of the broker 130, the customer indicates that a registration with a specific EIP 140 with which the broker 130 has created a trust relationship, must be used. The broker 130 starts an interaction with the EIP 140 using the shared secret key and which requires the customer, at some point, to authorise this by providing his credentials explicitly, for example, user ID and password, or implicitly, for example, through a cookie that the EIP 140 has set earlier in the browser of the customer 110, or by accessing a local secure element that stores the EIP credentials. The combination of broker credentials, the shared secret key in this case, and customer authentication and authorisation will make the EIP 140 expose the customer alias to the broker 130 which is then stored in the customer profile, as described with reference to Figure 4 above, and link with the PUI, or with the customer 'wallet'.

In another embodiment, the registration may be performed when trying to buy something from the merchant or supplier using the particular EIP 140 for the first time. In the interaction initiated by the merchant or supplier 120, the broker 130 initiates an interaction with the EIP 140 and, after authorisation by the customer 110, obtains the alias. However, as this alias is not yet present in the mapping table 320 (Figure 4), the broker 130 asks the merchant or supplier 120 to request the customer for a public user identifier (PUI). After the customer 110 submits this, the merchant or supplier 120 sends it to the broker 130 who will send out an email or equivalent communication to the customer 110 associated with the PUI. The customer 110 clicks on the URL and initiates an EIP alias registration procedure as described above.

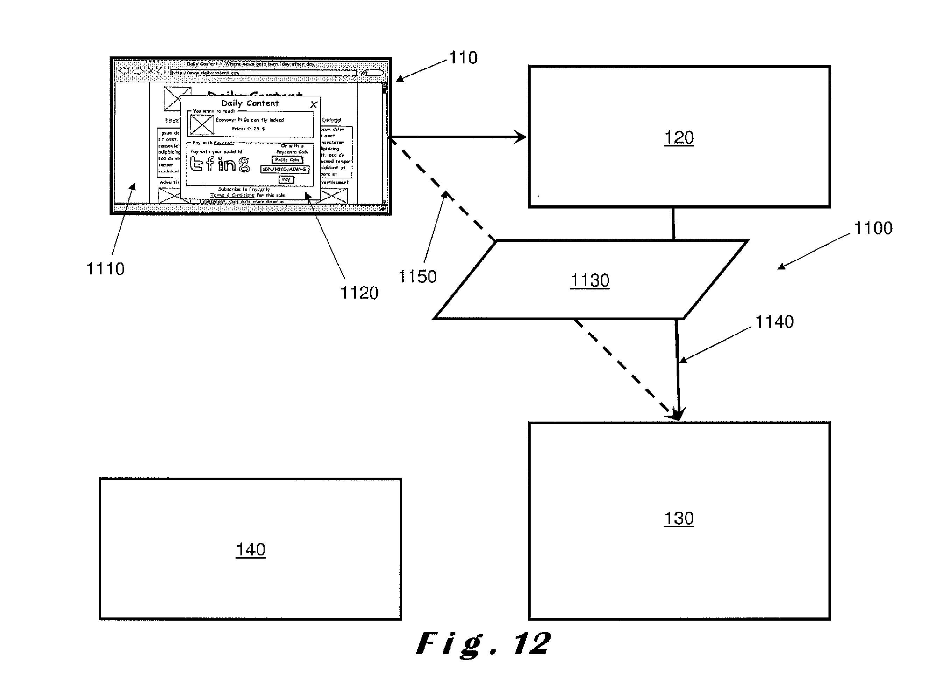

Figure 12 shows a transaction system 1100 illustrating the relationship between a customer 110, a merchant or supplier 1120, a broker 1130, and an EIP 140 in which the transaction is initiated using the use of the EIP as a fourth party. The customer 110 is shown visiting a merchant or supplier website 1110 so that he/she can access an online article or service. When the article or service requires payment, a payment box 1120 is provided for him/her to select the requested EIP 140 for use in payment. This selection is performed by clicking on the social network as described above with reference to Figures 6 and 7. In one embodiment, the payment box 1120 may be generated by a plug-in provided by the broker 130 to the merchant or supplier 120 and contains all necessary information and protocols to participate in the transaction. In another embodiment, the merchant or supplier 120 may create its own plug-in following application programming interface (API) specifications provided by the broker 130.

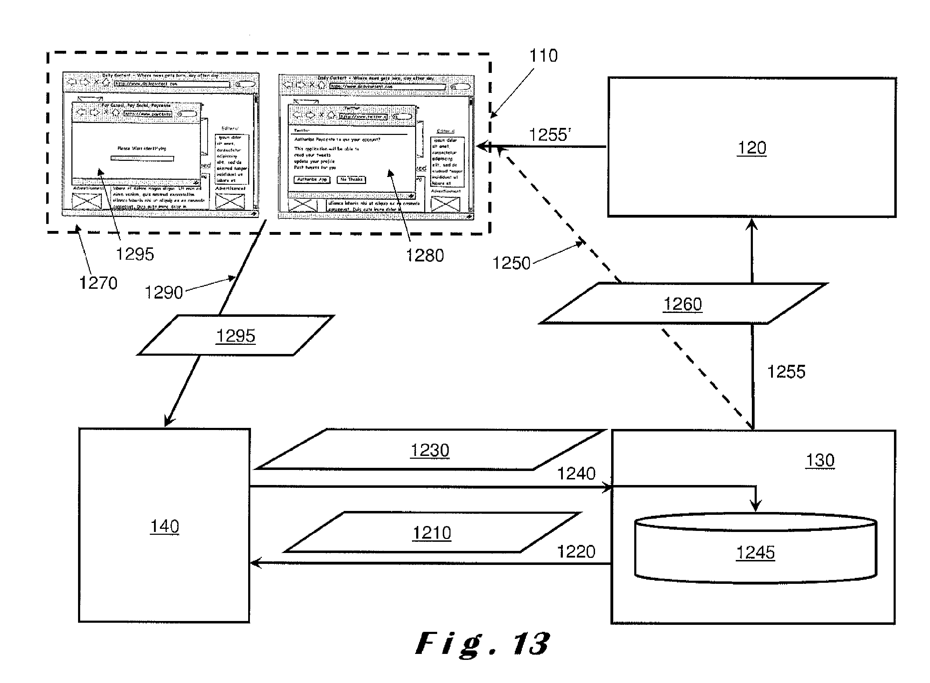

The merchant or supplier 120 sends a message 1130 with his/her own identity information, as indicated by arrow 1140, which may be, in one embodiment, the merchant or supplier 'wallet' public key, with which the broker 130 can credit the merchant or supplier 'wallet'. In one embodiment, this may be performed directly from the customer client application, for example, a web browser or mobile application 1110, as indicated by 1150 where the merchant or supplier 120 provided the necessary data to the client beforehand. In another embodiment, this may be performed from the merchant or supplier application itself as indicated by 1140. The broker 130 determines if he/she needs to get the alias of the customer 110 from the EIP 140 and initiates the specific protocol to communicate with the EIP 140. This is described in more detail below with reference to Figure 13. General transaction information, from the merchant or supplier, for example, price in MoE, article ID, description, etc., and the name of the EIP 140 to the broker 130 is also included in the message 1130.

In Figure 13, a generic example of a validation process 1200 in which the first step of the authentication between broker 130, customer 110 and EIP 140 is shown. The broker 130 obtains a first transaction specific alias that is linked to the identity of the broker 130 with the EIP 140 and which needs to be passed back to the customer, the EIP 140 being used to find and validate the customer alias. A specific protocol, the 'Oauth' protocol, is utilised as shown. This protocol exists in many versions and is the de-facto standard used by social networks, such as, *Facebook, Yahoo!, Linkedln, Twitter, Windows Live* and *Google*+.

The broker 130 uses, in this example, the shared secret key 1210 between the broker 130 and EIP 140 over a secured network channel, for example, a secure socket layer (SSL), to the EIP 140 together with other necessary information the EIP might require as indicated by arrow 1220. The EIP 140 identifies the broker based on the shared secret key 1210 and answers with a request token 1230 that will be used in the authentication with the customer 110, as indicated by arrow 1240. The request token 1230 together with an associated request token secret key is stored by the broker 130 in a database 1245 for this transaction. The database 1245 is an example of computer storage which may also be a memory or a file system.

The broker 130 needs then to connect the customer 110 with the EIP 140 to make the authorisation and retrieve the result. For that he/she needs to provide the customer 110 with the request token, as indicated by dotted arrow 1250, so the EIP 140 understands that the authorisation request is done on behalf of the broker 130. In one embodiment, this can be done by sending the request token together with the 'callback URL' pointing back to the broker 130 as well as other required information 1260 back to the merchant or supplier 120 or the customer client application 1270, either directly or through the merchant or supplier as indicated by arrows 1255 and 1255', and instructing the merchant or supplier 120 or customer client application 1270 to redirect the customer 110 directly to the EIP 140. This can be performed either in the same window or through a separate window 1280.

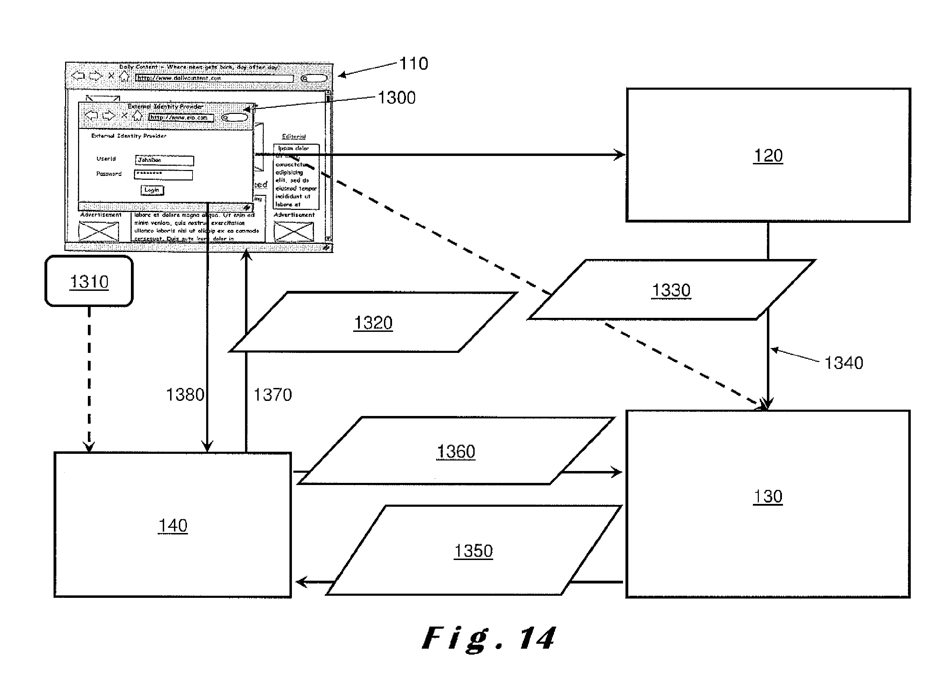

In another embodiment, the broker 130 takes direct control and requests the merchant or supplier 120 or customer client application 1270 to connect to the broker 130 either in the same window, or through a separate window 1285. In this case, it is the broker 130 who redirects the customer client application 1270 to the EIP 140 as indicated by arrow 1290. The customer client application 1270 will provide the request token 1295 and other required information to the EIP 140. The next step is shown in Figure 14.

In Figure 14, after the customer client application 1270 has connected with the EIP 140, the EIP will request authentication of the customer 110, in order to make the authorisation. This corresponds to a second part of the authentication process, where the customer 110 uses the first transaction specific alias to obtain a second transaction specific alias linking the identity of the customer 110 with the EIP 140 and which needs to be passed back to the broker 130 to be used by the latter to obtain the static alias of the customer 110 with the EIP 140 and matched with the alias stored by the broker 130. In one embodiment, this authentication is explicit where the customer needs to provide credentials like user ID and password as indicated by box 1300.

In another embodiment, the authentication is implicit because the customer client application 1270, for example, a web browser, provides a 'cookie' 1310 that has been set by the EIP 140 on an earlier visit, which authenticates the customer 110 in the background. In yet another embodiment, the authentication is implicit because the customer device or customer client application 1270 has explicit EIP integration, for example, on Apple iPhone having iOS, the Apple mobile operating system. Apple and iPhone are trademarks of Apple Inc.

Once the authentication has been made, the EIP 140 authorises the request based on the request token provided by the broker 130 and the customer authentication as indicated by arrow 1370. In one embodiment, the authorisation is automatic, and in another embodiment, the EIP may explicitly ask the customer 110 to authorise by clicking on a button as described above with reference to Figure 6, as indicated by arrow 1380. The EIP 140 provides then an authorisation verifier code 1320 that shows the authorisation has been made and redirects the customer client application 1270 to the 'callback URL', which is, in one embodiment, to the broker 130, and, in another embodiment, to the merchant or supplier 120. In the latter case, the merchant or supplier 120 sends the request token back the broker 130, together with the authorisation verifier 1330, as indicated by arrow 1340.

The merchant or supplier 120 cannot impersonate the broker 130 with the request token or authorisation verifier, as it has no access to the request token secret key which is needed to obtain the alias of the customer 110. Moreover, the merchant or supplier 120 does not have access to the customer identity as neither the request token nor authorisation verifier provides any information about the customer 110 in isolation.

The broker 130, now in possession of the request token, authorisation verifier and request token secret key has now everything he needs to obtain the alias of the customer 110. The broker 130 generates a signature 1350 using the request token secret key and submits this, together with his shared secret key, the authorisation verifier, the request token and other required information to the EIP 140. The EIP 140 returns the ID of the user at the EIP 140 as well as his screen name and other information 1360.

The broker 130 takes the EIP user ID, and looks up the associated PUI or 'wallet' ID of the customer 110. Together with the merchant or supplier 'wallet' public key and the other transaction information, the broker 130 can now debit the customer 'wallet' and credit the merchant or supplier 'wallet' as described above with reference to Figure 3, while subtracting a broker fee. Once the payment is completed, the broker 130 responds to the merchant or supplier 120 who then enables access to the article for the customer 110 as shown in Figure 8.

The present invention has been described with reference to specific embodiments and implementations. However, it will be appreciated that other embodiments and implementations are also possible whilst still within the scope of the present invention.

## Claims

1. A payment processing system for processing a payment transaction, the system comprising:-
a first entity tendering payment in said payment transaction for at least one item;
a second entity receiving payment from said first party in said payment transaction in return for supplying said at least one item; and
a third entity having a trust relationship with both said first and second parties and through which said payment transaction is to be facilitated;
**characterised in that** said third entity comprises an environment for transferring and storing electronic representations of at least one medium of exchange for transactional purposes;
and **in that** said third entity validates said payment transaction in accordance with unique identity information provided to it by both said first entity and said second entity, said first entity being represented as an alias to said second entity for authentication purposes.

2. A payment processing system according to claim 1, wherein said third entity further comprises at least one first entity profile relating to said first entity and at least one second entity profile relating to said second entity within said environment, said unique identity information of said first and second entities being stored in respective ones of said first entity profile and said second entity profile.

3. A payment processing system according to claim 2, wherein said third entity comprises at least one wallet associated with each entity profile.

4. A payment processing system according to claim 3, wherein said payment transaction comprises transferring at least one medium of exchange between a first entity wallet and a second entity wallet.

5. A payment processing system according to claim 4, wherein said each medium of exchange is represented in electronic format and an electronic representation of said medium of exchange is transferred between said first entity wallet and said second entity wallet.

6. A payment processing system according to any one of the preceding claims, wherein said alias of said first entity is provided by a data structure which is configured in accordance with said electronic representation of said medium of exchange.

7. A payment processing system according to claim 6, wherein said data structure is derived from a first data string which includes a private key.

8. A payment processing system according to claim 7, wherein said data structure has a fixed length hash value.

9. A payment processing system according to any one of claims 6 to 8, wherein said data structure forms part of a mapping table within said environment, said mapping table linking each data structure to said first entity profile.

10. A payment processing system according to claim 9, wherein said mapping table links each data structure to one of said first entity wallets within said first entity profile.

11. A payment processing system according to any one of claims 1 to 5, wherein said alias of said first entity is provided by a fourth entity, said first entity being associated with said fourth entity.

12. A payment processing system according to claim 11, wherein said fourth entity interacts with said first entity and said third entity during authentication to confirm said first entity identity for said second entity.

13. A payment processing system according to claim 12, wherein fourth entity information forms part of a mapping table within said environment, said mapping table linking said fourth entity information to said first entity profile.

14. A payment processing system according to claim 13, wherein said mapping table links said fourth entity information to one of said first entity wallets within said first entity profile.

15. A payment processing system according to any one of claims 11 to 14, wherein information relating to said fourth entity is stored in said first entity profile within said environment.

16. A payment processing system according to any one of claims 11 to 15, wherein said fourth entity comprises a social network.

## Amended claims

### Amended claims in accordance with Rule 137(2) EPC.

**1.** A method for authenticating & authorizing transactions using an external alias, over electronic networks **characterized by**:
initiating a transaction, by a first entity sending a transaction request to a second entity comprising:
the type of external alias to use;
any other required transactional information, but not requiring any specific information identifying the first entity to the second entity;
receiving said transaction request by a second entity and generating a new transaction request, sent to a third entity, comprising:
the type of alias the first entity requested;
information identifying the second entity to said third entity;
any other required transaction details;
receiving said new transaction request by the aforementioned third entity comprising:
an environment to create a trust relationship with, and store identity information of the first and second entity;
an ability to create a trust relationship with one or more fourth entities and retrieve one or more aliases of the first entity from said fourth entity and associate them with the identity of the first entity as known by the third entity;
an environment for obtaining, storing and transferring electronic representations of at least one medium of exchange for transactional purposes from the first to the second entity or from the second from the first entity;
initiating an authentication request by the third entity to the fourth entity as indicated in the aforementioned type of alias, and receiving an authentication initiation response from the fourth entity comprising:
a request token, indicating a request for authentication is created by the third entity;
a request token secret key, for future interaction in the authentication process between the third entity and the fourth entity;
instructing by the third entity of the first entity, while passing the request token and other required information excluding the request token secret key, to authenticate itself to the fourth entity as identified by the aforementioned type of alias **characterised in that** said fourth entity comprises:
an environment that already created a trust relationship with the third entity;
an existing authentication transaction request with the third entity related to aforementioned request token;
existing identity information of the first entity, or a way to register identity information of the first entity;
at least one way for the first entity to authenticate itself to the fourth entity;
authenticating of the first entity to the fourth entity by one of the methods it supports comprising:
userid and password of the first entity;
browser based cookies with authentication information;
authentication information stored in a secure element in the device the first entity uses;
mobile operating system supported integrations of the first entity with the fourth entity;
creating an authentication verifier code by the fourth entity based on the alias of the first entity existing in the fourth entity and the aforementioned request token and returning it to the first entity;
passing of the said authorization verifier code by the first entity to the third entity;
requesting of the identity alias of the first entity by the third entity to the forth entity by sending a message constructed from elements comprising:
request token;
authentication verifier code;
request token secret key;
the trust relationship between the third and the fourth entity;
receiving by the third entity from the fourth entity, after verification of the aforementioned message by the fourth entity, of the identity alias of the first entity as known by the fourth entity as well as other required information;
matching by the third entity of the identity alias of the first entity as received from the fourth entity, with the already stored identity alias of the first entity in the third entity;
performing of the transaction by the third entity between the first entity and the second entity;
informing by the third entity to the second entity of the transaction result of the transaction between the second entity and the first entity;
informing by the second entity to the first entity of the transaction result of the transaction between the first entity and the second entity and optionally providing access to the first entity of the object of the transaction.

**2.** The method of claim 1 where the fourth entity asks for explicit authorization to the first entity to divulge the first entity's alias to the third entity.

**3.** The method of claim 1 where the third entity asks for authorization of the transaction to the first entity after it retrieved the alias of the first entity.

**4.** The method of claim 1 where the environment in the third entity comprises at least one first entity profile relating to said first entity and at least one second entity profile relating to said second entity within said environment, said unique identity information of said first and second entities being stored in respective ones of said first entity profile and said second entity profile.

**5.** The environment of claim 4 wherein said third entity comprises at least one wallet or account associated with each entity profile.

**6.** The wallet or account of claim 5 which comprises at least one of the following:
a stored value account storing an amount of real or virtual currencies;
a payment instrument like a credit card or debit card;
a direct debit authorization to a financial account;
a post-paid billing system;
a pre-paid system;
any other system that can provide medium of exchange to facilitate the transaction.

**7.** The method of claim 6 where there are limits set in the entity profile, account or wallet on performing a transaction, comprising:
the amount of medium of exchange per transaction;
the amount of medium of exchange per time period;
a start date;
an end date;
a specific currency;
a reusability of authorization comprising of: one time, multiple times, per time period;
a specific first or second entity.

**8.** The method of claim 1 where the result of the transaction comprises at least one of:
transfer of medium of exchange from the first entity to the second entity, or vice-versa;
authorization of access to medium of exchange of the first entity by the second entity, or vice-versa;
transferring identity and other information of the first entity to the second entity;
registering of information from the second entity in the environment of the first entity, or vice-versa;
retrieving of information from the first entity environment by the second entity or vice-versa.

**9.** The method of claim 1 where the trust relationship between the third entity and the fourth entity comprises at least one of the following:
a shared secret key;
a public-private key pair;
an identity alias of the third entity with the fourth entity.

**10.** The method of claim 1 where the instruction by the third entity to the first entity to authenticate itself with the fourth entity passes through the second entity.

**11.** The method of claim 1 where the response by the fourth entity of the authentication of the first entity is passed from the first entity to the third entity through the second entity.

**12.** The method of claim 4 where the alias of the first entity, retrieved from the fourth entity is linked to the profile of the first entity.

**13.** The method of claim 5 where the alias for the first entity, retrieved from the fourth entity is linked to a wallet or account of the first entity.

**14.** The method of claim 1 where the third entity informs the first entity of the result of the transaction between the first entity and the second entity.

**15.** The method of claim 1 where the fourth entity is a social network.

**16.** The method of claim 1 where the interaction between the first, third and fourth entity is governed by the oauth protocol.
